# FASCICULE DE BREVET EUROPEEN

(11) **EP 1 420 966 B1**
(45) Date de publication et mention de la délivrance du brevet: **17.09.2008**
(21) Numéro de dépôt: 02787120.1
(22) Date de dépôt: 09.07.2002
(51) Int. Cl.: B60C 15/024, B60C 15/02, B60C 15/04, B60B 21/10, B60B 21/06

(54) **ENSEMBLE MONTE TUBELESS POUR CYCLE**
SCHLAUCHLOS MONTIERTE ANORDNUNG FÜR EIN FAHRRAD
TUBELESS MOUNTED ASSEMBLY FOR A CYCLE

(30) Priorité: 17.07.2001 FR 0109581
(43) Date de publication de la demande: 26.05.2004
(73) Titulaire: Société de Technologie Michelin, 63000 Clermont-Ferrand (FR); Michelin Recherche et Technique S.A., 1763 Granges-Paccot (CH)
(72) Inventeur: ALBERT, Loic, F-63100 Clermont-Ferrand (FR); MOREAU, Bernard, F-63100 Clermont-Ferrand (FR)
(74) Mandataire: Le Cam, Stéphane Georges Elie
(86) Numéro de dépôt international: PCT/EP2002/007620
(87) Numéro de publication internationale: WO 2003/008208

(56) Documents cités:
- EP-A- 0 334 955
- EP-A- 1 002 669
- DE-C- 886 697
- GB-A- 2 061 199
- US-A- 5 634 993
- US-B1- 6 257 676

## Description

L'invention concerne une jante pour une roue de cycle. L'invention vise également un ensemble monté pour cycle, plus particulièrement pour bicyclette, constitué d'une jante et d'un pneumatique. L'invention vise plus particulièrement des cycles destinés à être associés à des pneumatiques devant fonctionner sans chambre à air, du type « tubeless ».

Une jante usuelle en une seule partie du type tubeless, notamment destinée à des véhicules automobiles, est constituée de différentes zones ; tout d'abord, en partant d'un bord extérieur de la jante, on trouve un rebord de jante, ou aile, dont le rôle essentiel est de retenir le bourrelet du pneumatique à l'état gonflé ; ensuite le siège du bourrelet, sur lequel repose le bourrelet du pneumatique et qui en assure le serrage, ainsi que l'étanchéité à l'air ; et enfin une gorge destinée à permettre le montage du pneumatique du fait de son diamètre inférieur à celui du rebord. Dans le cas d'une jante comportant des humps, ceux-ci sont présents entre le siège du bourrelet et la gorge qui autorise le montage. Les humps sont des bossages dont la fonction est d'éviter ou tout au moins de retarder la survenance d'un décoincement du pneumatique notamment en cas de baisse de pression.

Le procédé de montage usuel d'un pneumatique tubeless sur une telle jante consiste en différentes étapes qui sont les suivantes ; on commence par faire passer une partie du premier bourrelet par-dessus le rebord de jante et on place cette partie dans la gorge. On peut alors faire passer le reste du bourrelet par-dessus le rebord grâce à une légère ovalisation de la tringle correspondante du pneumatique. Il en est de même pour faire passer le second bourrelet par-dessus le rebord de la jante. Le montage est ensuite terminé par une étape finale de gonflage à une pression telle qu'elle assure la mise en place des bourrelets sur les sièges en appui sur les rebords de jante. Durant cette dernière étape les bourrelets franchissent les humps qui forment un obstacle au passage desdits bourrelets jusqu'à leur siège respectif.

Les pneumatiques de bicyclette présentent quelques particularités ; en effet, les tringles sont très souples et la déformation de la zone basse peut donc être importante. Ceci ne va pas sans inconvénient dans le cas d'un pneumatique tubeless puisque l'étanchéité ne va pas sans inconvénient dans le cas d'un pneumatique tubeless puisque l'étanchéité doit être totale entre la jante et le pneumatique et plus précisément entre la jante et les bourrelets du pneumatique.

Bien que non limitée à de telles applications, l'invention sera plus particulièrement décrite en référence à des ensembles montés destinés à équiper des bicyclettes à usage routier. Une particularité de ces ensembles montés est que la pression de fonctionnement est de l'ordre de 8 bars ; celle-ci pouvant encore atteindre des valeurs de l'ordre de 11 bars lorsque les pneumatiques sont soumis à des conditions extrêmes, notamment lors de compétition durant lesquelles la température de l'air interne du pneumatique peut augmenter très sensiblement, et entraîner une augmentation de la pression. C'est par exemple le cas lors de freinages importants dans des descentes de col où le frottement du patin de fiein sur la jante conduit à une telle élévation de température.

Il est actuellement connu de réaliser des ensembles montés de type tubeless pour bicyclettes du type VTT (Vélo Tous Terrains) ; la pression de fonctionnement de tels pneumatiques est de l'ordre de 2 bars. Il a déjà été décrit, dans la demande de brevet EP 0 893 280 (US-B-6257676) une jante améliorée qui facilite les conditions de gonflage d'un tel pneumatique tubeless et qui améliore la tenue du pneumatique à l'état gonflé en cas de choc latéral violent. Une telle jante se caractérise par la présence d'une part d'une gorge étroite qui favorise la phase de gonflage en assurant l'étanchéité entre les bourrelets et la jante ; et d'autre part, cette jante se caractérise par la présence en bordure de gorge de humps qui autorisent le maintien des bourrelets du pneumatique sur les sièges prévus à cet effet en cas de choc latéral violent notamment, par exemple en cas d'impact sur des cailloux.

Des essais ont été réalisés avec ce type de jante pour la réalisation d'ensemble monté destiné à une utilisation routière et donc amené à des pressions de l'ordre de 8 bars. Il s'avère que si effectivement l'utilisation d'une jante telle que celle décrite par la demande de brevet EP 0 893 280 permet d'amorcer avec certitude le gonflage du pneumatique, quelles que soient les caractéristiques des pneumatiques testés, il se produit au-delà d'une certaine pression un décoincement d'au moins un bourrelet et en conséquence un déjantage du pneumatique. En outre, les pressions atteintes lors du décoincement des bourrelets du pneumatique sont généralement inférieures à 8 bars et donc inférieures à la pression de fonctionnement communément requise et nettement inférieures aux pressions qui peuvent être atteintes dans des situations extrêmes telles que celle exposée précédemment.

Les inventeurs se sont ainsi donnés pour mission la réalisation d'un ensemble monté constitué d'une jante et d'un pneumatique pour des utilisations sur bicyclette à usage routier, ledit ensemble monté étant de type tubeless et ne présentant pas de risques, notamment de déjantage pour l'utilisateur, aux pressions habituellement requises pour ce type d'usage.

Ce but a été atteint selon l'invention par un ensemble monté selon la revendication 1 et son utilisation selon la revendication 17.

Selon une réalisation préférée de l'invention, la génératrice forme un angle avec l'axe de rotation du pneumatique compris entre 16 et 26 degrés. De préférence encore, l'angle de la génératrice est supérieur à 18°. De préférence encore l'angle est inférieur à 22° notamment pour simplifier la réalisation industrielle de la jante.

Selon l'invention, on entend par « axiale », une direction parallèle à l'axe de rotation de la jante et par « radiale » une direction coupant l'axe de rotation de la jante et perpendiculaire à celui-ci. L'axe de rotation de la jante est l'axe autour duquel la jante tourne en utilisation normale. Le plan médian circonférentiel est un plan perpendiculaire à l'axe de rotation de la jante et qui divise la jante en deux moitiés. Un plan radial est un plan qui contient l'axe de rotation de la jante.

La caractéristique essentielle de la jante selon l'invention est que selon un profil de la jante dans un plan radial, les sièges de bourrelets présentent une génératrice de pente constante et dont l'angle par rapport à la direction axiale est compris entre 15 et 45°. Selon une réalisation préférée de l'invention, l'extrémité axialement intérieure de la génératrice est adjacente à la gorge de montage.

Avantageusement encore, la jante selon l'invention est symétrique par rapport à un plan médian circonférentiel.

Les essais réalisés avec les jantes selon l'invention montrent qu'il est possible d'atteindre la pression de service pour un usage routier sans observer de décoincement des bourrelets. En outre, il est apparu qu'il était également possible d'atteindre des pressions de l'ordre de 11 bars, c'est-à-dire des pressions qui correspondent aux conditions les plus extrêmes auxquelles peuvent être soumis les ensembles montés, sans risque pour l'utilisateur et notamment sans risque de décoincement.

Les améliorations apportées par l'invention au profil de la jante autorisent donc la réalisation d'un ensemble monté de type tubeless pour un usage routier avec la garantie d'un gonflage satisfaisant et qui ne présente pas de risque pour l'utilisateur.

Dans leur démarche, les inventeurs ont su mettre en évidence que les jantes usuelles pour cycles ainsi que celles précédemment développées pour des applications tubeless présentaient des faiblesses dans le coincement des bourrelets dans le cas d'utilisation de pneumatique route de type tubeless. Leurs études ont mis en évidence que lors du gonflage et de l'augmentation de la pression, la souplesse des tringles entraînent un passage de l'air sous le bourrelet entraînant une augmentation rapide et importante de la tension supportée par la tringle correspondant à un décollement du bourrelet par rapport au siège correspondant de la jante.

Les inventeurs ont ensuite su mettre en évidence que l'augmentation de la surface du bourrelet au contact de l'air, du fait de son décollement par rapport au siège de la jante, conduit à un décoincement du bourrelet à des pressions inférieures à celles devant être atteinte pour un même résultat lorsque le contact entre bourrelet et jante subsiste. Il s'ensuit donc que dès que la pression correspondant au décollement du bourrelet est atteinte, les risques de décoincement des bourrelets et de déjantage deviennent très importants.

Le profil de jante défini selon l'invention permet de maintenir un contact jante/bourrelet à des pressions plus élevées que celles mesurées lors du décoincement du bourrelet sur une jante connue.

En outre, la jante selon l'invention autorise un « clipsage » du pneumatique et a une fonction « antidécoincement » sous une pression de fonctionnement inférieure à la pression minimum recommandée.

Selon une réalisation préférée de l'invention, la différence de diamètre entre les extrémités des génératrices des sièges des bourrelets est comprise entre 0.5 et 3 mm et de préférence cette différence est supérieure à 1 mm et de préférence encore strictement supérieure à 2 mm. De telles différences de diamètres entre les extrémités de la génératrice des sièges de bourrelets favorisent le maintien d'un contact entre le bourrelet et le siège de jante lorsque la pression augmente.

De manière avantageuse, l'invention prévoit que la jante, dont la gorge est constituée d'un fond de gorge et de deux parois latérales, est telle qu'au moins les parties hautes des parois latérales font un angle d'au moins 35° et sont centrées sur le plan circonférentiel médian. Un tel angle va notamment favoriser le montage du pneumatique sur la jante ; en effet, la disposition des sièges de bourrelets peut être une difficulté pour le montage du pneumatique du fait notamment que cette disposition entraîne un franchissement plus important notamment en termes de déformation nécessaire des bourrelets lors du montage que ne l'impose une jante usuelle. La variante de réalisation de l'invention propose une paroi de gorge, tout au moins dans sa partie haute c'est-à-dire dans la zone immédiate avant le franchissement qui conduit au siège du bourrelet, dont la pente est moins raide que ce que propose les jantes usuelles ; une telle pente de paroi va permettre un franchissement « plus en douceur » en autorisant un glissement du bourrelet sur cette partie haute de la paroi.

Cette variante de réalisation va d'une part permettre d'assurer une meilleure mise en place des bourrelets sur leur siège et notamment une meilleure symétrie du positionnement desdits bourrelets. D'autre part, la déformation moins brusque des tringles des bourrelets permet de limiter les risques d'amorces d'endommagement desdites tringles.

Avantageusement encore, l'invention prévoit que les parties basses des parois de la gorge font un angle d'au plus 35° et sont centrées sur le plan circonférentiel médian. Une telle réalisation assure notamment une largeur suffisante du fond de gorge qui permet de recevoir les deux bourrelets du pneumatique avant que ne débute la phase de gonflage du montage dudit pneumatique sur la jante.

Selon une réalisation avantageuse de l'invention, les ailes de la jante comportent des crochets qui constituent un débord vers l'intérieur de la jante au sommet de chacune des ailes.

De préférence encore, les crochets constituent un débord vers l'intérieur de la jante d'au moins 0.5 mm par rapport à la surface de l'aile au point d'accrochage dudit crochet.

La présence de tels crochets permet d'augmenter l'efficacité du maintien du pneumatique sans observer de décoincement des bourrelets.

Une variante avantageuse de l'invention prévoit la présence de humps, disposés entre la gorge et les sièges des bourrelets, et plus précisément entre l'extrémité de la partie haute d'une paroi de la gorge et l'extrémité axialement intérieure d'un siège de bourrelet. Une telle réalisation peut également contribuer à favoriser un retard du décollement des bourrelets par rapport à la surface de la jante lorsque la pression augmente au sein du pneumatique. La fonction de ces humps est plus spécifiquement de maintenir les bourrelets sur leurs sièges notamment en cas de dégonflement du pneumatique ou de crevaison.

Selon un premier mode de réalisation de l'invention, le profil de la jante selon l'invention est directement réalisé selon les techniques usuelles connues de l'homme du métier, telles que les techniques de cintrage, de roulage et de soudage, notamment utilisées pour la réalisation de jantes en aluminium.

Selon un autre mode de réalisation de l'invention, la jante est obtenue par l'association d'une ébauche de jante et d'au moins un élément rapporté qui vient former les sièges des bourrelets définis selon l'invention. Dans le cas de la présence de humps, l'invention peut également prévoir selon cette variante que lesdits humps font parties des éléments rapportés.

Des variantes de l'invention selon ce dernier mode de réalisation peuvent encore prévoir que les éléments rapportés sont réalisés dans un matériau autre que celui de l'ébauche de la jante.

L'invention prévoit encore que les éléments rapportés peuvent être fixés sur l'ébauche de jante par tous moyens connus de l'homme du métier tels que par exemple par vissage, clipsage, seitissage, collage, ...

Dans une variante avantageuse de l'invention, notamment dans le cas de la réalisation de pneumatique de type tubeless, la zone de la jante recevant le pneumatique forme un pont supérieur dépourvu d'orifices à l'exception de l'orifice pour la valve de gonflage.

Ledit orifice de gonflage est par ailleurs de préférence prévu dans la gorge de montage et de préférence encore dans le fond ou zone basse de ladite gorge. Une telle conception favorise le gonflage d'un pneumatique de type tubeless, l'air pouvant être introduit directement entre les bourrelets du pneumatique ceux-ci étant au préalable insérés dans la gorge de montage.

Selon une variante préférée de l'invention, la jante est reliée à un moyeu central de la roue par une pluralité de rayons fixés à un pont inférieur de la jante.

Le pneumatique selon l'invention adapté à l'ensemble monté selon la revendication 1, de type tubeless, comportant notamment deux tringles souples, possède des bourrelets comportant au moins une lèvre et lesdites lèvres étant en appui sur au moins une partie des parois latérales de la gorge de montage, en condition de roulage, c'est-à-dire après montage du pneumatique sur la jante.

Selon un premier mode de réalisation de l'invention, les lèvres sont des excroissances des bourrelets obtenues lors de la fabrication desdits bourrelets.

Selon un autre mode de réalisation de l'invention, les lèvres sont obtenues par l'association d'au moins un élément rapporté sur le bourrelet, ledit élément pouvant être dans un matériau autre que celui constituant les bourrelets.

Les inventeurs ont su mettre en évidence que les lèvres du pneumatique selon l'invention permettent de contribuer à éviter un décollement du pneumatique lors du gonflage, notamment pour une utilisation routière, en combinaison avec des jantes selon l'invention.

Selon une réalisation préférée de l'invention les tringles du pneumatique présentent un module d'élasticité inférieur à 8 000 daN/mm². Au-delà d'une telle valeur le pneumatique serait moins sensible au décoincement du fait de la moindre souplesse de ses tringles. De préférence également, le module d'élasticité est supérieur à 3 000 daN/mm². Il apparaît qu'en dessous de cette valeur, les inventeurs ont su mettre en évidence que la réalisation de l'invention par le profil de la jante, éventuellement combiné à la présence de lèvres sur le pneumatique est difficilement réalisable dans le cas d'un ensemble monté pour bicyclette à usage routier.

Le pneumatique est choisi avec un développement adapté à la jante, selon les pratiques usuelles.

D'autres détails et caractéristiques avantageux de l'invention ressortiront ci-après de la description d'un exemple de réalisation de l'invention en référence aux figures 1 à 3 qui représentent :
- figure 1, un schéma d'une vue en coupe radiale d'une jante selon l'invention,
- figure 2, un schéma d'une vue en coupe radiale d'un second mode de réalisation d'une jante selon l'invention,
- figure 3, un schéma d'une vue en coupe radiale d'un troisième mode de réalisation d'une jante selon l'invention,
- figure 4, un schéma d'une vue partielle en coupe radiale d'un pneumatique selon l'invention,
- figure 5, un schéma d'une vue partielle en coupe radiale d'un autre pneumatique selon l'invention,
- figure 6, un schéma d'une vue partielle en coupe radiale d'un ensemble monté selon l'invention.

Les figures ne sont pas représentées à l'échelle pour en simplifier la compréhension.

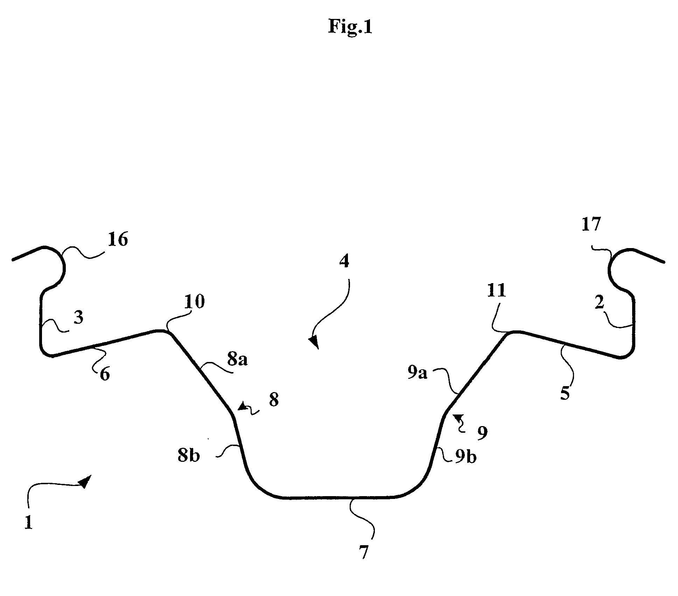

La figure 1 représente schématiquement un profil en coupe radiale d'une jante 1 selon l'invention. La jante est constituée de deux ailes 2, 3 aux extrémités extérieures, reliées à la gorge 4 par les sièges des bourrelets 5, 6. L'orientation des ailes 2 et 3 est sensiblement parallèle au plan médian circonférentiel. Les sièges des bourrelets 5 et 6 forment un angle avec l'axe de rotation d'environ 20°. La gorge 4 est constituée d'une part d'un fond de gorge 7 et de parois latérales 8, 9 inhabituellement inclinées par rapport à des jantes usuelles pour vélo. Ces parois 8 et 9 selon l'invention sont dans la représentation de la figure 1 réalisées en deux parties ; des premières parties basses 8b, 9b qui forment un angle d'environ 30° et sont centrées sur le plan circonférentiel médian et des secondes parties ou parties hautes 8a, 9a qui forment un angle d'environ 65° et sont centrées sur le plan circonférentiel médian. Les ailes présentent en outre dans leur partie supérieure des crochets qui constituent un débord vers l'intérieur de la jante de 0.5 mm par rapport au plan des ailes aux points d'accrochage desdits crochets.

Lors du montage d'un pneumatique de type tubeless, de forme traditionnelle, sur une telle jante selon l'invention, on commence par amener les deux bourrelets du pneumatique dans la gorge 4 de la jante.

Cette première étape est simple de réalisation car les tringles des pneumatiques pour bicyclette sont usuellement réalisées en un matériau souple tel que par exemples une polyamide aromatique ou des fibres de verre. L'utilisation de tringles souples pour les pneumatiques de bicyclettes est notamment liée au besoin de simplifier le montage dudit pneumatique qui est généralement réalisé par l'utilisateur, éventuellement avec des outils simples et peu encombrants pour pouvoir être transportés. En outre, la souplesse de ces tringles permet également à l'utilisateur de transporter un pneumatique non monté, l'encombrement de celui-ci étant limité par le fait qu'il soit possible de le plier.

Dans une seconde étape, on gonfle le pneumatique ; pour cela, la jante 1 est munie d'une valve, non représentée sur les figures, avantageusement placée dans le fond de gorge 7 pour permettre d'injecter l'air directement entre les deux bourrelets du pneumatique. Le fond de gorge 7 est prévu avec une largeur telle qu'il puisse recevoir les deux bourrelets, ceux-ci étant en appui contre les parois 8 et 9 pour assurer l'étanchéité du système. Ce résultat est notamment obtenu par la présence des parois 8b et 9b inclinées notamment en partie basse de la gorge 4 qui permettent de réduire la largeur du fond de gorge 7 pour une largeur donnée de jante 1.

La partie haute des parois 8a et 9a de la gorge 4 est avantageusement prévue avec une inclinaison plus importante que la partie basse desdites parois 8b et 9b pour permettre une ascension des bourrelets jusqu'aux sommets 10 et 11 de ces parois qui par rapport à des jantes usuelles nécessitent une déformation plus importante des bourrelets du fait de leur hauteur. La forte inclinaison de la partie haute des parois 8a et 9a permet effectivement aux bourrelets d'atteindre ces sommets 10 et 11 de manière « douce » et sans à-coups, ce qui permet de conserver un contact étanche entre les bourrelets et les parois et en outre permet d'obtenir un bon positionnement des bourrelets sur les sièges 5 et 6 de la jante 1, ledit positionnement étant obtenu de manière symétrique entre les deux bourrelets.

Les bourrelets du pneumatique sont ainsi mis en place sur les sièges 5 et 6 prévus à cet effet, au contact des ailes 2 et 3 qui retiennent lesdits bourrelets. La pente desdits sièges selon l'invention inclinée axialement vers l'extérieur de la jante va permettre de retenir les dits bourrelets et prévenir tout risque de déjantage, notamment dans le cas d'ensemble monté destiné à équiper des bicyclettes pour un usage routier.

Les ailes 2 et 3 comportent encore des crochets 16 et 17 qui contribuent également au maintien du contact entre les bourrelets du pneumatique et les sièges 5 et 6 lorsque la pression augmente au sein du pneumatique.

Des essais ont été réalisés avec ce type d'ensemble monté dans une dimension 23-622 sur une jante de 622 selon une technologie tubeless. A titre de comparaison, les mêmes essais sont réalisés sur des jantes telles que celles évoquées précédemment destinées à équiper des VTT en ensemble monté tubeless. Les pneumatiques utilisés sont des pneumatiques de type tubeless qui présentent un module d'élasticité de 4000 daN/mm². Pour un usage routier, la pression de fonctionnement est généralement de 8 bars. Sachant comme il l'a été dit précédemment que dans des conditions extrêmes, la pression atteinte peut être supérieure, les essais sont réalisés jusqu'à l'observation d'un décoincement.

Les résultats obtenus sont les suivants ; dans le cas de la jante déjà connue, il apparaît qu'il est impossible d'effectuer le montage d'un pneumatique tubeless. En effet, on observe un déjantage du pneumatique à une pression inférieure à celle qu'il est nécessaire d'atteindre pour l'application considérée.

Dans le cas de la jante selon l'invention, les essais ont montré que le montage d'un pneumatique tubeless sur cette jante peut être réalisé sans encombre à la pression de fonctionnement de 8 bars et qu'il est possible d'atteindre des pressions de l'ordre de 11 bars sans risque de déjantage. En effet, le décoincement du pneumatique a été observé à une pression de 14,5 bars, pression qui n'a pas lieu d'être atteinte pour ce type de pneumatique.

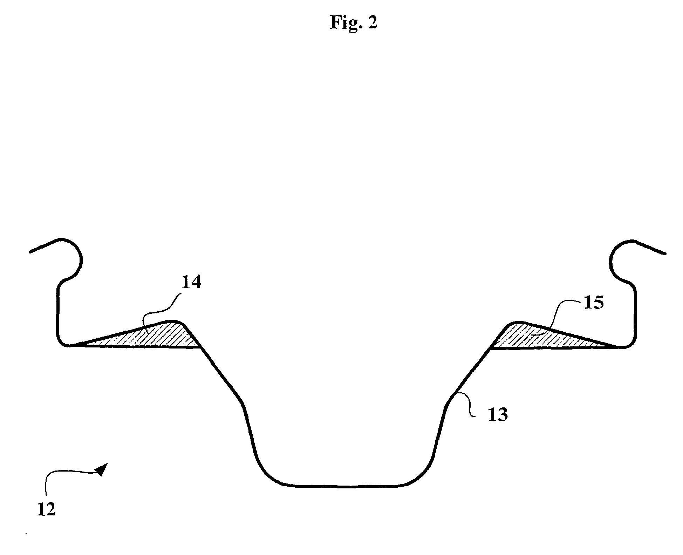

Sur la figure 2 est représentée schématiquement une seconde réalisation d'une jante 12 selon l'invention. Le profil selon un plan radial de cette jante 12 est identique à celui de la jante 1 représentée sur la figure 1. Par contre, comme évoqué précédemment, la jante 12 est réalisée par la combinaison d'une ébauche de jante 13 et de deux éléments rapportés 14, 15 qui constituent notamment les sièges des bourrelets selon le profil prévu par l'invention.

Une réalisation d'une jante selon l'invention en plusieurs éléments peut éventuellement permettre de simplifier la réalisation industrielle d'une telle jante dont le profil est complexe. Une telle réalisation peut par ailleurs autoriser la modification de jantes existantes par l'ajout desdits éléments supplémentaires 14 et 15. En effet, dans ce cas les éléments rapportés sont définis pour compléter le profil d'une jante existante afin d'obtenir le profil défini par l'invention.

Les éléments rapportés constituent donc essentiellement le siège des bourrelets mais aussi la partie haute des parois de la gorge et notamment la partie qui peut comporter selon l'invention une partie fortement inclinée pour faciliter la mise en place des bourrelets lors du montage du pneumatique.

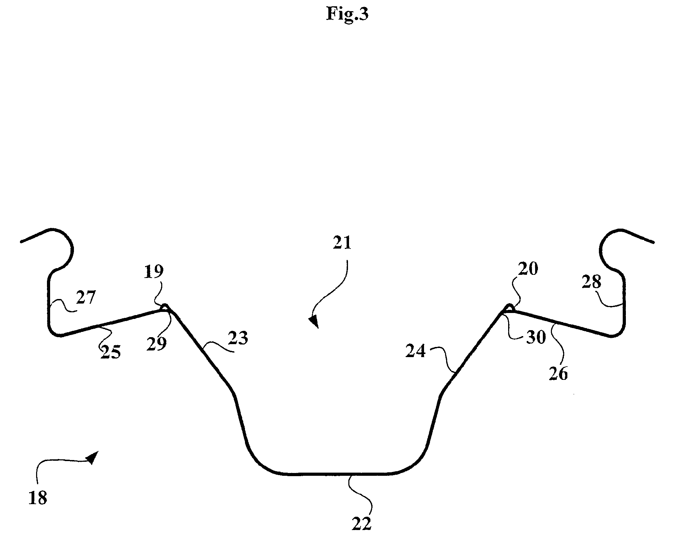

La figure 3 illustre un autre type de réalisation d'une jante 18 selon l'invention, ladite jante comportant des humps 19 et 20. Dans le cas de cette figure 3, la jante 18 comporte notamment une gorge 21 constituée d'un fond de gorge 22 et de parois latérales 23 et 24 bordées respectivement par les sièges des bourrelets 25, 26 eux-mêmes rattachés aux ailes 27, 28. Selon cette variante de réalisation de l'invention, on trouve aux sommets 29 et 30 de la gorge, c'est-à-dire aux points d'intersections des parois 23, 24 de la gorge et des sièges des bourrelets 25, 26, les humps 19, 20. Lors du montage d'un pneumatique sur la jante 18, les bourrelets sont amenés à franchir ces humps pour venir en position sur les sièges 25, 26. Leur fonction est essentiellement de prévenir tous risques de décoincement en cas de perte de pression. Toutefois, il apparaît que ces humps peuvent également contribuer au maintien en place des bourrelets lors du gonflage et d'éviter un décollement desdits bourrelets.

Dans le cas d'une jante du type de celle de la figure 2 qui est constituée d'éléments rapportés qui constituent notamment les sièges des bourrelets, lesdits humps seront avantageusement réalisés sur les éléments rapportés.

Les jantes définies par l'invention permettent donc la réalisation d'ensembles montés tubeless, destinés à des bicyclettes pour un usage routier, qui ne présentent pas de risque de décoincement et de déjantage du fait de la pression de fonctionnement ou des pressions pouvant être atteintes dans des situations extrêmes.

La jante selon l'invention présente en outre l'avantage de pouvoir recevoir un pneumatique traditionnel, c'est-à-dire un pneumatique devant être associé à une chambre à air. Une telle réalisation est intéressante dans la mesure ou elle peut permettre à l'utilisateur de se dépanner s'il ne dispose pas d'un pneumatique tubeless par exemple pour effectuer une réparation.

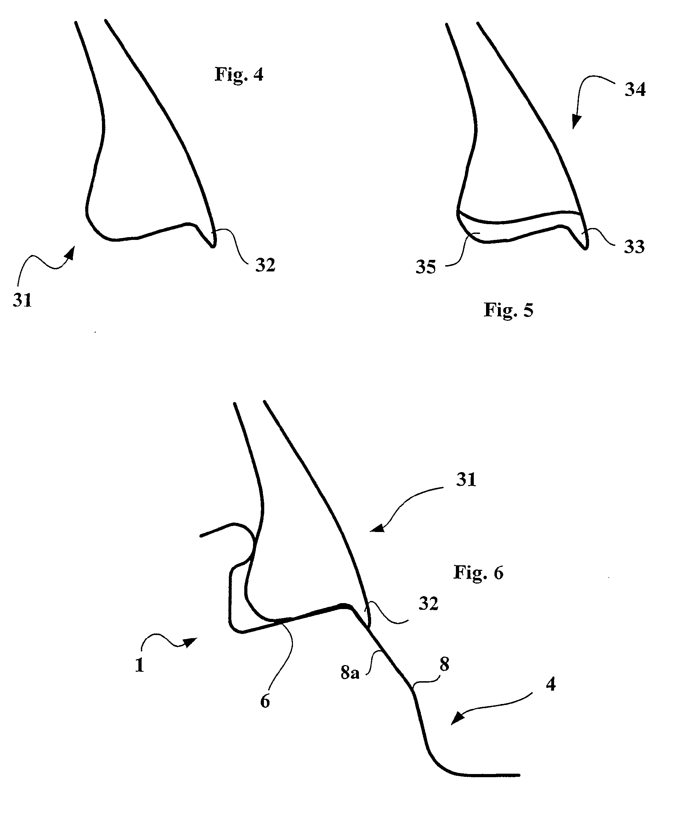

La figure 4 illustre de manière très simplifiée une partie basse d'un pneumatique pour la réalisation d'un ensemble monté selon l'invention. Sur cette figure 4 est représentée un bourrelet 31 qui comporte selon l'invention une lèvre 32 qui constitue une excroissance du bourrelet vers le bas. La partie inférieure 32 du bourrelet 31 qui doit venir en appui sur le siège d'une jante est prolongé par cet appendice ou lèvre 32 qui après montage sera en appui sur la paroi de la gorge de montage de ladite jante comme on le verra par la suite.

La figure 5 illustre le cas d'une lèvre 33 réalisée en un matériau autre que celui constituant le bourrelet 34. Cette variante de réalisation peut permettre d'obtenir des propriétés différentes du bourrelet de manière localisée par exemple en ce qui concerne sa rigidité ou bien sa capacité à créer une résistance au frottement par rapport au matériau constituant la jante. Dans le cas de la figure 5, la parti ajoutée va au-delà de la lèvre 33 elle-même et constitue toute la zone inférieure 35 du bourrelet 34 ; cela peut notamment permettre de garantir la solidarité de cette partie 35 avec le reste du bourrelet 34. La partie ainsi ajoutée au bourrelet 34 et comportant notamment la lèvre peut être de toute autre forme et constituer toute autre zone du bourrelet en incluant la lèvre 33.

Le matériau constituant la lèvre 33 et la partie 35 peut être un matériau caoutchouc ou un matériau plastique. Cette partie 35 peut être rendue solidaire du bourrelet 34 par tout moyen connu de l'homme du métier et notamment par collage, par vulcanisation, par assemblage mécanique,...

La figure 6 représente schématiquement une partie d'un ensemble monté selon l'invention comportant un pneumatique tel que celui de la figure 4 et une jante 1 telle que celle de la figure 1. Le pneumatique ainsi mis en place comporte un bourrelet 31 dont la partie inférieure vient en appui sur le siège 6. La partie inférieure est prolongée par la lèvre 32 qui repose sur la partie haute de la zone 8a de la paroi 8 de la gorge de montage 4. Le positionnement de la lèvre 32 sur la zone 8a offre une protection complémentaire contre un décollement du bourrelet 31 en s'opposant au passage de l'air. Il est à noter que cette combinaison selon l'invention d'un pneumatique comportant une lèvre 32 et d'une jante selon l'invention, qui autorise un « clipsage » du bourrelet, procure des résultats particulièrement intéressant pour un usage routier.

De façon générale l'invention doit être comprise comme s'appliquant à tout type de roue devant être associée à des pneumatiques comportant des tringles souples et dont les pressions de fonctionnement sont relativement importantes et notamment supérieures à 5 bars. Il s'agit par exemple de roues pour des fauteuils roulants pour handicapés ou bien encore des roues des véhicules utilisées sur des véhicules à faible consommation tels que ceux du « Challenge Shell ».

## Revendications

1. Ensemble monté pour cycle constitué essentiellement d'une roue et d'un pneumatique de type tubeless, ledit pneumatique comportant notamment deux tringles souples dans ses bourrelets, ladite jante étant constituée de deux ailes, accolées à deux sièges, destinés à recevoir les bourrelets du pneumatique, séparés l'un de l'autre par une gorge de montage **caractérisée en ce que** selon le profil de la jante dans un plan radial, les sièges des bourrelets ont une génératrice dont l'extrémité axialement extérieure est sur un cercle de diamètre inférieur au diamètre du cercle sur lequel se trouve l'extrémité axialement intérieure, **en ce que** ladite génératrice forme un angle avec l'axe de rotation du pneumatique compris entre 15 et 45 degrés et **en ce que** les tringles des pneumatiques présentent un module d'élasticité inférieur à 8 000 daN/mm² et supérieur à 3 000 daN/mm².

2. Ensemble monté selon la revendication 1 **caractérisée en ce que** l'angle formé par la génératrice des sièges des bourrelets et l'axe de rotation est compris entre 16 et 26 degrés.

3. Ensemble monté selon la revendication 1 ou 2 **caractérisée en ce que** la différence de diamètre entre les extrémités des génératrices des sièges des bourrelets est comprise entre 0.5 et 3 mm et de préférence strictement supérieure à 2 mm.

4. Ensemble monté selon la revendication 1, 2 ou 3, la gorge de montage étant constituée d'un fond de gorge et de deux parois latérales, **caractérisée en ce qu'**au moins les parties hautes des parois font un angle d'au moins 35° et sont centrées sur le plan circonférentiel médian.

5. Ensemble monté selon l'une des revendications 1 à 4, la gorge de montage étant constituée d'un fond de gorge et de deux parois latérales, **caractérisée en ce que** les parties basses des parois de la gorge font un angle d'au plus 35° et sont centrées sur le plan circonférentiel médian.

6. Ensemble monté selon l'une des revendications 1 à 5 **caractérisée en ce que** les ailes comportent des crochets.

7. Ensemble monté selon la revendication 6 **caractérisée en ce que** les crochets constituent un débord vers l'intérieur de la jante d'au moins 0.5 mm par rapport au plan de l'aile au point d'accrochage dudit crochet.

8. Ensemble monté selon l'une de revendications 1 à 7 **caractérisée en ce que** des humps sont disposés entre la gorge et les sièges des bourrelets.

9. Ensemble monté selon l'une de revendications 1 à 8 **caractérisée en ce que** les sièges des bourrelets sont obtenus par l'association d'au moins un élément rapporté sur une ébauche de la jante.

10. Ensemble monté selon l'une des revendications 1 à 9 **caractérisée en ce** la zone recevant le pneumatique forme un pont supérieur dépourvu d'orifices à l'exception de l'orifice pour la valve de gonflage.

11. Ensemble monté selon la revendication 10 **caractérisé en ce que** l'orifice pour la valve de gonflage est prévu dans la gorge.

12. Ensemble monté selon l'une des revendications 1 à 11 **caractérisée en ce que** la jante est reliée à un moyeu central par une pluralité de rayons fixés à un pont inférieur de lajante.

13. Ensemble monté selon l'une des revendications précédentes **caractérisé en ce que** les bourrelets du pneumatique comportent au moins une lèvre et **en ce que** lesdites lèvres sont en appui sur au moins une partie des parois latérales de la gorge de montage.

14. Ensemble monté selon la revendication 13 **caractérisé en ce que** les lèvres sont des excroissances des bourrelets et **en ce qu**'elles sont obtenues lors de la fabrication desdits bourrelets.

15. Ensemble monté selon la revendication 13 **caractérisé en ce que** les lèvres sont obtenues par l'association d'au moins un élément rapporté sur le bourrelet.

16. Ensemble monté selon la revendication 15 **caractérisé en ce que** les lèvres sont réalisées en un matériau autre que celui constituant les bourrelets.

17. Utilisation d'un ensemble monté selon l'une des revendications 1 à 16 sur une bicyclette à usage routier.

## Claims

1. Mounted assembly for cycles consisting essentially of a wheel and a tyre of the tubeless type, the said tyre having in particular two flexible bead wires in its beads, the said rim consisting of two flanges, attached to two seats, intended to receive the beads of a tyre, separated from each other by a mounting groove, **characterised in that,** according to the profile of the rim in a radial plane, the bead seats have a generatrix, the axially outer end of which is on a circle of smaller diameter than the diameter of the circle on which the axially inner end is situated, **in that** the said generatrix forms an angle with the axis of rotation of the tyre of between 15 and 45 degrees and **in that** the bead wires of the tyres have a modulus of elasticity less than 8000 daN/mm² and greater than 3000 daN/mm².

2. Mounted assembly according to Claim 1, **characterised in that** the angle formed by the generatrix of the bead seats and the axis of rotation is between 16 and 26 degrees.

3. Mounted assembly according to Claim 1 or 2, **characterised in that** the difference in diameter between the ends of the generatrices of the bead seats is between 0.5 and 3 mm and preferably strictly greater than 2 mm.

4. Mounted assembly according to Claim 1, 2 or 3, the mounting groove consisting of a groove bottom and two side walls, **characterised in that** at least the upper parts of the walls make an angle of at least 35° and are centred on the circumferential mid-plane.

5. Mounted assembly according to one of Claims 1 to 4, the mounting groove consisting of a groove bottom and two side walls, **characterised in that** the bottom parts of the walls of the groove make an angle of at most 35° and are centred on the circumferential mid-plane.

6. Mounted assembly according to one of Claims 1 to 5, **characterised in that** the flanges have hooks.

7. Mounted assembly according to Claim 6, **characterised in that** the hooks form an overhang towards the inside of the rim of at least 0.5 mm with respect to the plane of the flange at the hooking point of the said hook.

8. Mounted assembly according to one of Claims 1 to 7, **characterised in that** humps are arranged between the groove and the bead seats.

9. Mounted assembly according to one of Claims 1 to 8, **characterised in that** the bead seats are obtained by the association of at least one element added onto a rim blank.

10. Mounted assembly according to one of Claims 1 to 9, **characterised in that** the region receiving the tyre forms an upper bridge without orifices except for the orifice for the inflation valve.

11. Mounted assembly according to Claim 10, **characterised in that** the orifice for the inflation valve is provided in the groove.

12. Mounted assembly according to one of Claims 1 to 11, **characterised in that** the rim is connected to a central hub by a plurality of spokes fixed to a lower bridge of the rim.

13. Mounted assembly according to one of one of the preceding Claims, **characterised in that** the beads of the tyre have at least one lip and **in that** the said lips bear on at least one part of the side walls of the mounting groove.

14. Mounted assembly according to Claim 13, **characterised in that** the lips are excrescences from the beads and **in that** they are obtained during the production of the said beads.

15. Mounted assembly according to Claim 13, **characterised in that** the lips are obtained by the association of at least one element added onto the bead.

16. Mounted assembly according to Claim 15, **characterised in that** the lips are made of a material different from that of which the beads are composed.

17. Use of a mounted assembly according to one of Claims 1 to 16 on a bicycle for road use.

## Patentansprüche

1. Montagebaugruppe für Fahrrad, die im Wesentlichen aus einem Rad und einem Luftreifen des schlauchlosen Typs gebildet ist, wobei der Luftreifen in seinen Wulsten insbesondere zwei nachgiebige Leisten aufweist, wobei die Felge aus zwei Flanschen gebildet ist, die an zwei Sitze angefügt sind, die dazu vorgesehen sind, die Wulste des Luftreifens aufzunehmen, und voneinander durch eine Montagenut getrennt sind, **dadurch gekennzeichnet, dass** entsprechend dem Profil der Felge in einer radialen Ebene die Sitze der Wulste eine Erzeugende haben, deren axial äußeres Ende sich auf einem Kreis mit einem Durchmesser befindet, der kleiner als der Durchmesser des Kreises ist, auf dem sich das axial innere Ende befindet, **dass** die Erzeugende mit der Drehachse des Luftreifens einen Winkel bildet, der im Bereich von 15 bis 45 Grad liegt, und **dass** die Leisten der Luftreifen einen Elastizitätsmodul besitzen, der kleiner als 8000 daN/mm² und größer als 3000 daN/mm² ist.

2. Montagebaueinheit nach Anspruch 1, **dadurch gekennzeichnet, dass** der durch die Erzeugende der Sitze der Wulste und die Drehachse gebildete Winkel im Bereich von 16 bis 26 Grad liegt.

3. Montagebaueinheit nach Anspruch 1 oder 2, **dadurch gekennzeichnet, dass** die Durchmesserdifferenz zwischen den Enden der Erzeugenden der Sitze der Wulste im Bereich von 0,5 bis 3 mm liegt und vorzugsweise streng größer als 2 mm ist.

4. Montagebaueinheit nach Anspruch 1, 2 oder 3, wobei die Montagenut durch einen Nutboden und zwei Seitenwände gebildet ist, **dadurch gekennzeichnet, dass** wenigstens die oberen Teile der Wände einen Winkel von wenigstens 35° bilden und auf die Medianumfangsebene zentriert sind.

5. Montagebaueinheit nach einem der Ansprüche 1 bis 4, wobei die Montagenut aus einem Nutboden und zwei Seitenwänden gebildet ist, **dadurch gekennzeichnet, dass** die unteren Teile der Wände der Nut einen Winkel von höchstens 35° bilden und auf die Medianumfangsebene zentriert sind.

6. Montagebaueinheit nach einem der Ansprüche 1 bis 5, **dadurch gekennzeichnet, dass** die Flansche Haken aufweisen.

7. Montagebaueinheit nach Anspruch 6, **dadurch gekennzeichnet, dass** die Haken einen Überstand ins Innere der Felge von wenigstens 0,5 mm in Bezug auf die Ebene des Flansches am Punkt der Anbringung des Hakens bilden.

8. Montagebaueinheit nach einem der Ansprüche 1 bis 7, **dadurch gekennzeichnet, dass** zwischen der Nut und den Sitzen der Wulste Höcker angeordnet sind.

9. Montagebaueinheit nach einem der Ansprüche 1 bis 8, **dadurch gekennzeichnet, dass** die Sitze der Wulste durch Zuordnen wenigstens eines Elements, das an einen Rohling der Felge angefügt ist, erhalten werden.

10. Montagebaueinheit nach einem der Ansprüche 1 bis 9, **dadurch gekennzeichnet, dass** die Zone, die den Luftreifen aufnimmt, eine obere Brücke bildet, die mit Ausnahme der Öffnung für das Luftventil keinerlei Öffnungen besitzt.

11. Montagebaueinheit nach Anspruch 10, **dadurch gekennzeichnet, dass** die Öffnung für das Luftventil in der Nut vorgesehen ist.

12. Montagebaueinheit nach einem der Ansprüche 1 bis 11, **dadurch gekennzeichnet, dass** die Felge mit einer Mittelnabe über mehrere Speichen, die an einer unteren Brücke der Felge befestigt sind, verbunden ist.

13. Montagebaueinheit nach einem der vorhergehenden Ansprüche, **dadurch gekennzeichnet, dass** die Wulste des Luftreifens wenigstens eine Lippe aufweisen und **dass** sich die Lippen an wenigstens einem Teil der Seitenwände der Montagenut abstützen.

14. Montagebaueinheit nach Anspruch 13, **dadurch gekennzeichnet, dass** die Lippen Ausstülpungen der Wulste sind und **dass** sie bei der Herstellung der Wulste erhalten werden.

15. Montagebaueinheit nach Anspruch 13, **dadurch gekennzeichnet, dass** die Lippen durch Zuordnen wenigstens eines an den Wulst angefügten Elements erhalten werden.

16. Montagebaueinheit nach Anspruch 15, **dadurch gekennzeichnet, dass** die Lippen aus einem Material hergestellt sind, das von jenem, aus dem die Wulste gebildet sind, verschieden ist.

17. Verwendung einer Montagebaueinheit nach einem der Ansprüche 1 bis 16 an einem Fahrrad für den Straßengebrauch.
